# EUROPEAN PATENT APPLICATION

(11) **EP 4 485 032 A1**
(43) Date of publication of application: **01.01.2025**
(21) Application number: 24182397.0
(22) Date of filing: 14.06.2024
(51) Int. Cl.: G02B 6/54

(54) **FOLDABLE PULLING GRIP FOR INSTALLING FIBER OPTIC CABLES AND METHOD OF USING SAME**

(30) Priority: 26.06.2023 US 202363523147 P
(71) Applicant: Corning Research & Development Corporation, Corning, New York 14831 (US)
(72) Inventor: GARCIA MEDINA, Erika Giovanna, Hickory, 28602 (US)
(74) Representative: Reddie & Grose LLP

(57) **Abstract**

A pulling grip for routing at least one fiber optic cable along a pathway of a fiber optic network is disclosed. The pulling grip includes a foldable body defining an opened position and a closed position. In the opened position, the foldable body is configured to receive a connection interface (ferrule, connector, adapter, etc.) of the fiber optic cable. In the closed position, the foldable body is configured to receive and at least partially enclose the connection interface of the fiber optic cable. The pulling grip further includes a pulling band connected to or connectable to the foldable body and configured to connect to a strength member of the fiber optic cable. A fiber optic cable assembly for routing along a pathway of a fiber optic network, a method of attaching a pulling grip to a fiber optic cable, and a method of routing a fiber optic cable along a pathway of a fiber optic network are also disclosed.

## Description

### Priority Application

This application claims the benefit of priority of U.S. Provisional Application No. 63/523,147, filed on June 26, 2023, the content of which is relied upon and incorporated herein by reference in its entirety.

### Technical Field

This disclosure relates generally to fiber optic cables, and more particularly to a foldable pulling grip for use during installation of fiber optic cables. The disclosure also relates to a method of attaching a foldable pulling grip to fiber optic cables and to a method of using the foldable pulling grip to install fiber optic cables, such as in a datacenter, a central office, or other locations of a fiber optic network.

### Background

The large amount of data and other information transmitted over the internet has led businesses and other organizations to develop large scale data centers for organizing, processing, storing, and/or disseminating large amounts of data. Data centers contain a wide range of information technology (IT) equipment including, for example, servers, networking switches, routers, storage subsystems, etc. Data centers further include a large amount of cabling and racks to organize and interconnect the IT equipment in the data center. Modern data centers may include multi-building campuses having, for example, one primary or main building and a number of auxiliary buildings in close proximity to the main building. All the buildings on the campus are interconnected by a local fiber optic network. Cables may be routed through conduits, ducts, raceways, etc. ("pathways") within and between the buildings.

To route the fiber optic cables through the pathways during installation or during an upgrade with new or additional fiber optic cables, one end of the cable is typically provided with a pull grip assembly (referred to as a "pull grip" or "pulling grip"). A tension member that extends through the pathway is then coupled to the pulling grip and the fiber optic cable is pulled through the pathway by the tension member. Depending on several factors, including the size of the fiber optic cable, the length of the pathway, and the resistance met during the pulling of the cable through the pathway, the fiber optic cable may be subjected to relatively high tensile forces (e.g., on the order of several hundreds of pounds of force).

While current implementations of pulling grips for fiber optic cables and their use in routing fiber optic cables through pathways are generally satisfactory for their intended purpose, with increased demand for bandwidth, manufacturers and installers have identified a number of drawbacks to existing arrangements. For example, existing pulling grips are typically designed to be used with only one fiber optic cable at a time. Thus, if an installer wishes to install multiple fiber optic cables along the same pathway of a fiber optic network, the installer would have to pull the fiber optic cables in separate installation steps (e.g., one at a time in a serial manner). Such is a time-consuming task and an inefficient use of an installer's time.

With this in mind, there is a desire to provide pulling grips that can be used with more than one fiber optic cable at a time, and preferably with several fiber optic cables at a time. This will allow for more efficient installation of fiber optic cables to meet or exceed the current demands of fiber optic installation.

### Summary

In one aspect of the disclosure, a pulling grip for routing at least one fiber optic cable along a pathway of a fiber optic network is disclosed. The at least one fiber optic cable includes an outer jacket, a plurality of optical fibers carried within the outer jacket, at least one strength member extending along a length of the at least one fiber optic cable, and at least one connection interface terminating the plurality of optical fibers. The pulling grip includes a foldable body having a proximal end and a distal end and defines an opened position and a closed position. In the opened position, the foldable body is configured to receive the at least one connection interface between the proximal end and the distal end of the foldable body. In the closed position, the foldable body forms an elongate tubular member defining an interior cavity. The foldable body is configured to receive the at least one connection interface within the interior cavity in the closed position such that the pulling grip at least partially encloses the at least one connection interface. The pulling grip further includes a pulling band connected to or connectable to the foldable body and is configured to be releasably connected to the at least one strength member of the at least one fiber optic cable. In this way, a tensile load imposed on the pulling grip during installation is transferred to the at least one strength member of the at least one fiber optic cable along a load path that bypasses the at least one connection interface. Thus, the risk of damaging the at least one connection interface is reduced during installation.

Optionally, the foldable body may include a plurality of planar panels in a side-by-side arrangement. Each of the plurality of planar panels may be adjoined to at least one adjacent planar panel by at least one bend region that allows adjacent planar panels to fold relative to each other. Further, optionally, the foldable body may be formed from a monolithic sheet of a material. In the opened position, the foldable body may have a generally planar configuration that allows the at least one connection interface to be positioned within the bounds of the planar foldable body in an easy manner. Additionally, in the closed position, the elongate tubular member formed by the foldable body may have a polygonal cross-sectional profile, preferably one selected from a quadrilateral, a pentagon, or a hexagon.

Optionally, the pulling band may include a first end configured to be connected to a tension member for pulling the at least one fiber optic cable along the pathway of the fiber optic network, and a second end configured to be connected to the at least one strength member of the at least one fiber optic cable to which the pulling grip is connected. The pulling band may be connected to or connectable to the foldable body at one or more locations between the first end and second end of the pulling band and between the proximal end and distal end of the foldable body so that an overlapping length of the pulling band extends along at least a portion of a length of the foldable body. Optionally, the pulling band may be connected or connectable to the foldable body at a first location adjacent the proximal end of the foldable body. Further, the pulling band may also be connected or connectable to the foldable body at a second location adjacent the distal end of the foldable body.

Optionally, a longitudinal distance between the first location and the second location may be greater than 50% of the length of the foldable body, and preferably greater than 70% of the length of the foldable body. The foldable body may include at least a first slot at the first location and the pulling band may be configured to extend through the first slot to connect the pulling band to the foldable body at the first location. Further, the foldable body may include at least a second slot at the second location and the pulling band may be configured to extend through the second slot to connect the pulling band to the foldable body at the second location.

Optionally, in the closed position, the pulling band may be configured to extend within the interior cavity for at least 50% of the overlapping length of the pulling grip, preferably for at least 70% of the overlapping length of the pulling grip, and even more preferably for at least 90% of the overlapping length of the pulling grip. Optionally, the first end of the pulling band may be configured to extend beyond the proximal end of the foldable body. Further, the second end of the pulling grip may be configured to be positioned between the proximal end and distal end of the foldable body, and preferably adjacent the distal end of the foldable body. Moreover, the pulling band may be slidably connected to or connectable to the foldable body such that the pulling band can be selectively moved or adjusted independently of the foldable body.

Optionally, the pulling grip may include at least one fastener to selectively secure the foldable body in the closed position. The at least one fastener may be adjustable so as to accommodate different numbers of fiber optic cables in the interior cavity of the foldable body. The at least one fastener may be a hook and loop fastener, a tab and slot fastener, or a press button fastener, for example. Further, the pulling grip may include an end cap for closing off the interior cavity at the proximal end of the foldable body. The end cap may include an aperture through which the pulling band may extend to an exterior of the pulling grip. Optionally, the end cap may be integrally formed with the foldable body. Alternatively, however, the end cap may be a separate element from the foldable body and connected thereto, such as by bonding.

In another aspect of the disclosure, a fiber optic cable assembly for routing along a pathway of a fiber optic network is disclosed. The fiber optic cable assembly includes at least one fiber optic cable including an outer jacket, a plurality of optical fibers carried within the outer jacket, at least one strength member extending along a length of the at least one fiber optic cable, and at least one connection interface terminating the plurality of optical fibers. The fiber optic cable assembly further includes the pulling grip according to the first aspect described above connected to an end of the fiber optic cable. In the closed position, the pulling grip at least partially encloses the at least one connection interface of the fiber optic cable within the interior cavity of the foldable body.

Optionally, the at least one fiber optic cable may include a plurality of fiber optic cables, such as two, three, or more fiber optic cables within the same pulling grip. Further, the pulling band may be connected to the at least one strength member of one or more of the plurality of fiber optic cables. For example, optionally, the pulling band may be connected to at least one strength member from each of the plurality of fiber optic cables contained within the pulling grip. This provides a secure connection between the pulling grip and the multiple fiber optic cables.

In a further aspect of the disclosure, a method of attaching a pulling grip to at least one fiber optic cable is disclosed. The pulling grip includes a foldable body and a pulling band. The at least one fiber optic cable includes an outer jacket, a plurality of optical fibers carried within the outer jacket, at least one strength member extending along a length of the at least one fiber optic cable, and at least one connection interface terminating the plurality of optical fibers. The method includes arranging the foldable body of the pulling grip in an opened position, positioning the at least one fiber optic cable relative to the foldable body such that the at least one connection interface is located between a proximal end and a distal end of the foldable body, connecting the pulling band to the at least one strength member of the at least one fiber optic cable, and arranging the foldable body of the pulling grip in a closed position. In the closed position, the foldable body defines an elongate tubular member having an interior cavity. The at least one connection interface is located within the interior cavity such that the pulling grip at least partially encloses the at least one connection interface. The method further includes releasably securing the foldable body in the closed position.

Optionally, the method may further include connecting the pulling band to the foldable body. Optionally, arranging the foldable body of the pulling grip in the opened position may include arranging the foldable body in a generally planar configuration. Optionally, arranging the foldable body of the pulling grip in the closed position may include folding the foldable body about a plurality of bend regions in the foldable body to define the elongate tubular member.

Optionally, at least one fiber optic cable may include a plurality of fiber optic cables and the positioning step may be repeated for each of the plurality of fiber optic cables. Further, the connecting step may also be repeated for each of the plurality of fiber optic cables.

In yet another aspect of the disclosure, a method of routing at least one fiber optic cable along a pathway of a fiber optic network is disclosed. The at least one fiber optic cable includes an outer jacket, a plurality of optical fibers carried within the outer jacket, at least one strength member extending along a length of the at least one fiber optic cable, and at least one connection interface terminating the plurality of optical fibers. The method includes attaching a pulling grip to the at least one fiber optic cable according to the aspect described above. The method further includes applying a tensile load on the pulling band of the pulling grip to route the at least one fiber optic cable along the pathway of the fiber optic network. In this way, the pulling grip directs the tensile load to the at least one strength member of the at least one fiber optic cable along a load path that bypasses the at least one connection interface, thereby minimizing damage during the installation process.

### Brief Description of the Drawings

The accompanying drawings are included to provide a further understanding and are incorporated in and constitute a part of this specification. The drawings illustrate one or more embodiment(s), and together with the description serve to explain principles and operation of the various embodiments. Features and attributes associated with any of the embodiments shown or described may be applied to other embodiments shown, described, or appreciated based on this disclosure.
Fig. 1 is a schematic illustration of a data center campus according to an embodiment of the disclosure.
Fig. 2 is a partial perspective view of an embodiment of a data hall of the data center of Fig. 1.
Fig. 3 is a schematic view of an embodiment of a row of equipment racks of the data hall of Fig. 2
Fig. 4 is a cross-sectional view of a fiber optic cable including a strength member according to an embodiment of the disclosure.
Fig. 5 is a perspective view of the fiber optic cable of Fig. 4.
Fig. 6 is a perspective view of a pulling grip in a closed position according to an embodiment of the disclosure.
Fig. 6A is a perspective view of an alternative embodiment of a pulling grip according to an embodiment of the disclosure.
Fig. 6B is a perspective view of a further alternative embodiment of a pulling grip according to an embodiment of the disclosure.
Fig. 6C is a perspective view of a further alternative embodiment of the pulling grip according to an embodiment of the disclosure.
Fig. 7 is a plan view of the pulling grip of Fig. 6 in the opened position showing the pulling band secured to a strength member of a fiber optic cable located within the pulling grip.
Fig. 7A is a plan view of an alternative embodiment of the pulling grip of Fig. 6 showing the pulling band secured to the strength members of more than one fiber optic cable located within the pulling grip.
Fig. 7B is a plan view of a further alternative embodiment of the pulling grip of Fig. 6 showing the pulling band secured to the strength members of each fiber optic cable located within the pulling grip.
Fig. 8 is a plan view of the pulling grip of Fig. 6 in the opened position (and without fiber optic cables).
Fig. 8A is a plan view of an alternative embodiment of the pulling grip of Fig. 8 in the opened position.
Fig. 8B is a plan view of a further embodiment of the pulling grip of Fig. 8 in the opened position.
Fig. 8C is a plan view of a further alternative embodiment of the pulling grip of Fig. 8 in the opened position.

### Detailed Description

The exemplary embodiments described herein are provided for illustrative purposes and are not limiting. Other exemplary embodiments are possible, and modifications may be made to the exemplary embodiments within the scope of the present disclosure. Therefore, the description below is not meant to limit the scope of the present disclosure. In general, the description relates to a foldable pulling grip for installing a fiber optic cable, and preferably multiple fiber optic cables, along a pathway of a fiber optic network. The pulling grip has an opened position that facilitates easy positioning of the connection interface(s) (e.g., ferrule, connector, or adapter) of the fiber optic cable within the bounds of the pulling grip. The pulling grip is then foldable to a closed position configured as an elongate tubular member defining an interior cavity that contains the connection interface(s) of the fiber optic cable(s). The pulling grip also includes a pulling band that connects to the strength member(s) of the fiber optic cable(s) contained within the pulling grip. A tension member that is pre-routed along the pathway is connected to the pulling band and pulled back along the pathway so as to pull the fiber optic cable(s) forward along the pathway, and thereby install the fiber optic cable(s) along the pathway. The tension load imposed from the tension member is transferred from the pulling grip to the strength members along a load path that bypasses the connection interface(s) of the fiber optic cable(s), thereby reducing the risk of damage to the fiber optic cable(s) during installation.

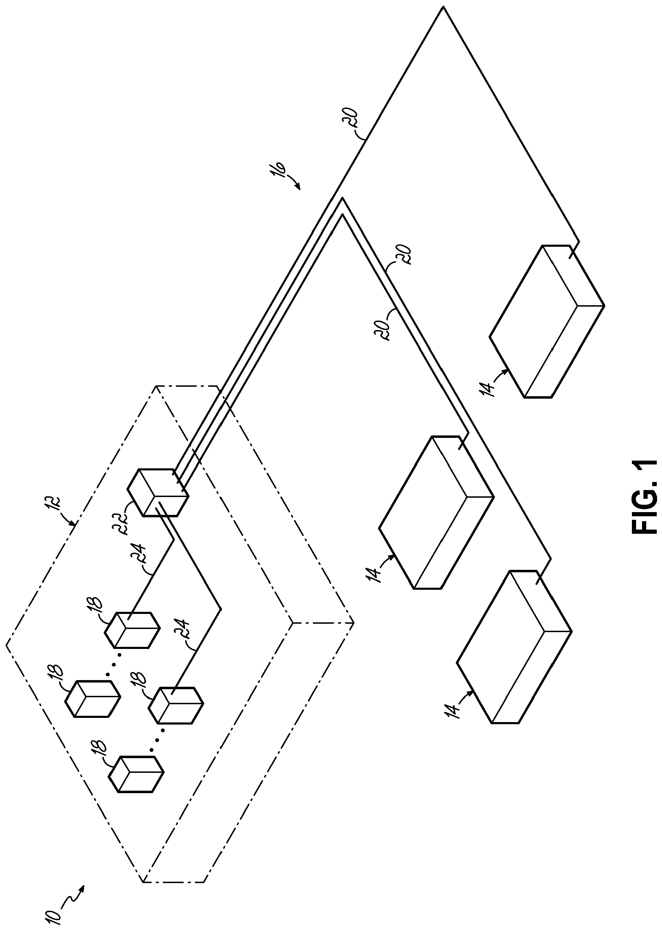

As illustrated in Fig. 1, a modern-day data center 10 may include a collection of buildings (referred to as a data center campus) having, for example, a main building 12 and one or more auxiliary buildings 14 in close proximity to the main building 12. While three auxiliary buildings 14 are shown, there may be more or less depending on the size of the campus. The data center 10 provides for a local fiber optic network 16 that interconnects the auxiliary buildings 14 with the main building 12. The local fiber optic network 16 allows network equipment 18 in the main building 12 to communicate with various network equipment (not shown) in the auxiliary buildings 14. In the exemplary embodiment shown, the local fiber optic network 16 includes trunk cables 20 extending between the main building 12 and each of the auxiliary buildings 14. Conventional trunk cables 20 generally include a high fiber-count arrangement of optical fibers for passing data and other information through the local fiber optic network 16. In the example illustrated in Fig. 1, the trunk cables 20 from the auxiliary buildings 14 are routed to one or more distribution cabinets 22 housed in the main building 12 (one shown).

Within the main building 12, a plurality of indoor fiber optic cables 24 are routed between the network equipment 18 and the one or more distribution cabinets 22. The indoor cables 24 generally include a high fiber-count arrangement of optical fibers for passing data and other information from the distribution cabinets 22 to the network equipment 18. Although only the interior of the main building 12 is schematically shown in Fig. 1 and discussed above, each of the auxiliary buildings 14 may house similar equipment for similar purposes. Thus, although not shown, each of the trunk cables 20 may be routed to one or more distribution cabinets 22 in one of the auxiliary buildings 14 in a manner similar to that described above. Furthermore, each of the auxiliary buildings 14 may include indoor cables 24 that extend between network equipment 18 and the one or more distribution cabinets 22 of the auxiliary building 14.

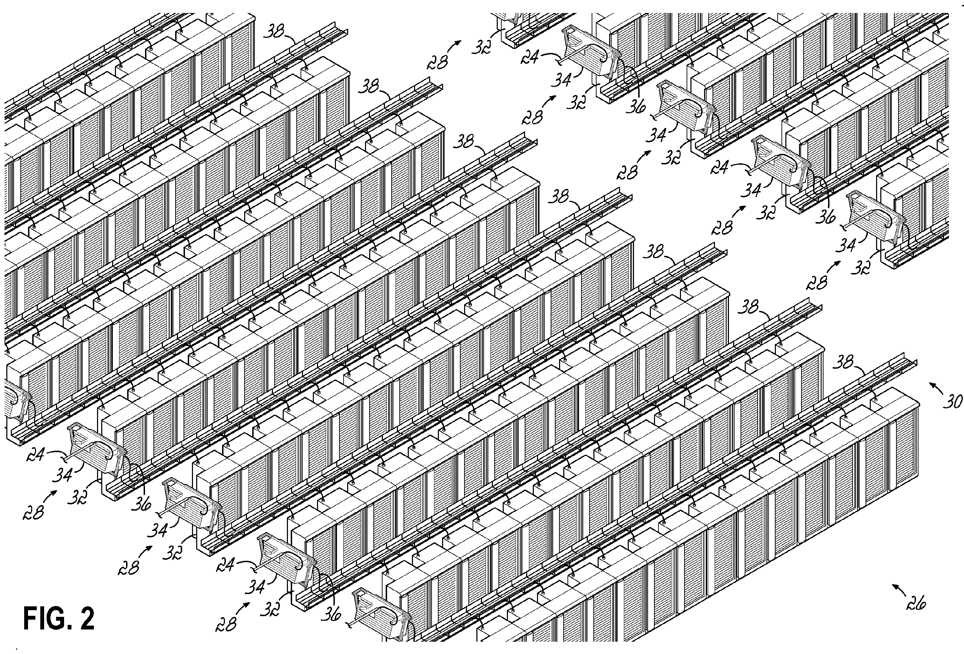

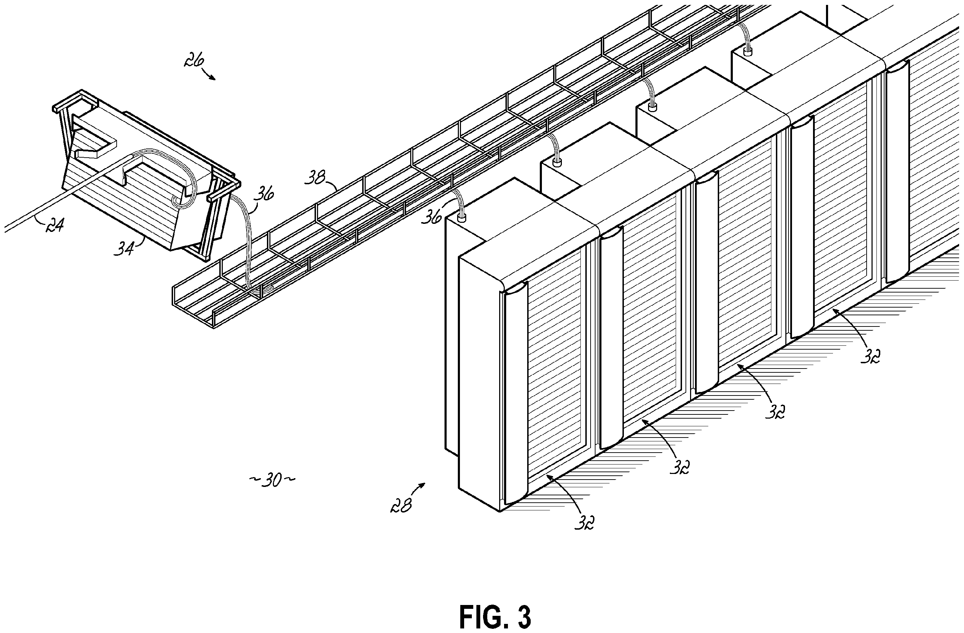

As illustrated in more detail in Figs. 2 and 3, the network equipment 18 in the main building 12 or an auxiliary building 14 may be arranged in one or more data halls 26 that generally include a plurality of spaced-apart rows 28 on one or both sides of an access pathway 30. The arrangement of the data halls 26 into rows 28 helps organize the large number of equipment, fiber optic cables, fiber optic connections, etc. Each of the rows 28 includes a plurality of equipment racks (or cabinets) 32 generally arranged one next to the other along the row 28. Each of the equipment racks 32 is a vertically arranged framework for holding various network equipment 18 of the data center 10, as is generally known in the telecommunications industry. In one common arrangement, and as further illustrated in Fig. 2, each row 28 may include an intermediate distribution frame 34 at the head end of the row 28 closest to the access pathway 30.

The intermediate distribution frame 34 represents a termination point of at least some of the optical fibers carried by one or more of the indoor cables 24, for example. Although the intermediate distribution frame 34 is shown as being positioned above the row 28, in other embodiments the intermediate distribution frame 34 may be in a cabinet (not shown) at the head end of the row 28 or in the first equipment rack 32 at the head end of the row 28. In yet other embodiments, the intermediate distribution frame 34 may be located within the associated row 28, such as in the middle of the row 28, and be above, below, or within one of the equipment racks 32. In a conventional arrangement, one or more distribution cables 36 are connected to the intermediate distribution frame 34 of a row 28 and routed along a cable tray 38 generally disposed above the row 28. The network equipment 18 in the equipment racks 32 is then optically connected to the one or more distribution cables 36 to provide the interconnectivity of the network equipment 18 (e.g., equipment racks 32) of the data center 10.

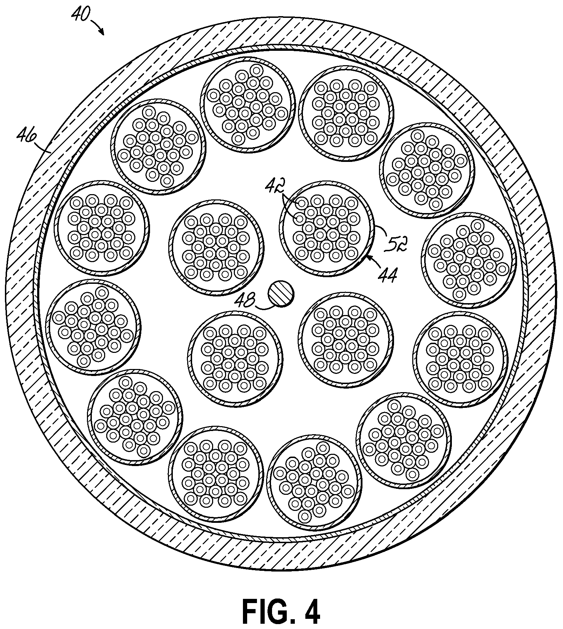

Referring now to Fig. 4, a fiber optic cable 40 generally includes a high fiber-count arrangement of optical fibers 42 for passing data and other information through the local fiber optic network 16. The fiber optic cable 40 may be a row distribution cable 36, described above. Further, aspects of the invention may also prove beneficial to an indoor cable 24 or a trunk cable 20, also described above. Regardless, the number of optical fibers 42 carried by the fiber optic cable 40 and how the optical fibers 42 are arranged within the fiber optic cable 40 may vary based on the application. The fiber optic cable 40 in the depicted embodiment includes a plurality of routable subunits 44, and each routable subunit 44 is configured to carry a pre-selected number of optical fibers 42. Although the fiber optic cable 40 is shown as including sixteen routable subunits 44, the number of subunits 44 may be more or less than this number in alternative embodiments. The routable subunits 44 may be arranged within an outer protective sheath or outer jacket 46, as is generally known in the industry.

The fiber optic cable 40 generally includes at least one strength member 48 that extends along a length of the fiber optic cable 40 and provides tensile strength to the fiber optic cable 40 during installation of the fiber optic cable 40 in a pathway (e.g., an indoor/outdoor conduit or duct, a cable tray 38, etc.) of the fiber optic network. In the example embodiment shown, a strength member 48 is located within the fiber optic cable 40 among the subunits 44. However, it is to be understood that one or more strength members 48 could be located in alternative locations in the fiber optic cable 40 (e.g., in the outer jacket 46). Each of the routable subunits 44 is configured to carry a pre-selected number of optical fibers 42. By way of example and without limitation, each routable subunit 44 may be configured to carry 24 optical fibers 42. It should be recognized, however, that more or less optical fibers 42 may be carried by each of the routable subunits 44. Optionally, the optical fibers 42 may be loosely held within an outer subunit sheath or jacket 52. Alternatively, the optical fibers 42 may be arranged as ribbons (not shown) also held within the outer subunit jacket 52.

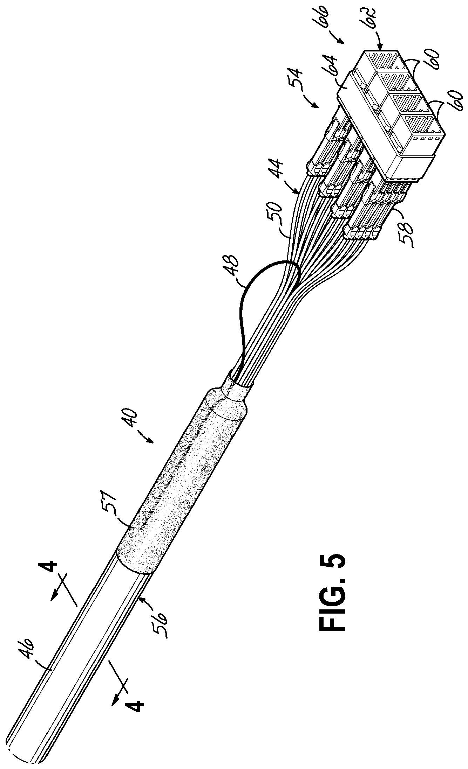

Referring now to Fig. 5, the fiber optic cable 40 has a distribution end 54, a main cable section 56, and a terminal end (not shown) opposite the distribution end 54. Only a portion of the main cable section 56 is shown in Fig. 5, and in some embodiments the terminal end may have a configuration similar to the distribution end 54 such that discussion of the distribution end 54 may equally apply to the terminal end in such embodiments. However, embodiments are also possible where the terminal end has a configuration different than the distribution end 54.

To prepare the fiber optic cable 40 for installation through a pathway, the outer jacket 46 of the fiber optic cable 40 may be removed or stripped to expose a working length of the plurality of optical fibers 42, such as a working length of the plurality of routable subunits 44 of the fiber optic cable 40. Various devices for removing the outer jacket 46 of the fiber optic cable 40 are generally well known in the fiber optic industry and thus a further explanation of such devices and their use will not be described herein. Removing or stripping a portion of the outer jacket 46 from the fiber optic cable 40 also exposes a portion of the at least one strength member 48 of the fiber optic cable 40. In the depicted embodiment, the exposed portion of the at least one strength member 48 is directed back along the outer jacket 46 of the fiber optic cable 40 and secured such that the at least one strength member 48 can be utilized to pull the fiber optic cable 40 through or along a pathway (e.g., withstand several hundreds of pounds of pulling force). Particularly, in the depicted embodiment, the exposed portion of the at least one strength member 48 is secured against the outer jacket 46 of the fiber optic cable 40 by a heat shrink wrap 57. It should be recognized, however, that alternative methods of securing the strength member 48 such that the at least one strength member 48 may be utilized in the manner described above (and in greater detail below).

Optionally, the plurality of optical fibers 42 of the fiber optic cable 40 may be left unterminated, i.e., no connectors or other connection interfaces installed on the optical fibers 42 that would facilitate an optical connection to another optical device. Alternatively, however, the plurality of optical fibers 42 may be terminated by one or more connection interfaces 58, as explained in greater detail below. By way of example, and without limitation, the optical fibers 42 may be terminated by one or more ferrules (without other connection interface structure), by one or more fiber optic connectors which include the one or more ferrules, or by other or additional connection interface structures. For example, optionally, the plurality of optical fibers 42 may be terminated by one or more fiber optic connectors, and the fiber optic connectors may be positioned in an adapter associated with the terminated end of the plurality of optical fibers 42. As used herein, the term "connection interface" connotes these various structures for terminating the plurality of optical fibers 42.

With continued reference to Fig. 5, in the depicted embodiment, the distribution end 54 of the fiber optic cable 40 may include a plurality of connection interfaces 58 for connection to network equipment 18 that terminates one or more of the optical fibers 42 carried by the fiber optic cable 40. The individual optical fiber 42 or groups of optical fibers 42 terminated by each connector interface 58 are carried within a respective jacket, which may be one of the subunit outer jackets 52 that extend beyond an end of the outer jacket 46. The connector interface 58 may be configured to be connected to an adapter 60 (e.g., a four-port adapter) associated with the intermediate distribution frame 34 located at the head end of the row 28 of racks 32. Similarly, the terminal end of the fiber optic cable 40 may include a plurality of terminal connectors (not shown) terminating the plurality of optical fibers 42 at the terminal end of the fiber optic cable 40.

In the depicted embodiment, a plurality of adapters 60 are arranged adjacent to each other to define a ganged adapter 62. In the depicted embodiment, the ganged adapter 62 includes four adapters 60 arranged side-by-side to define the ganged adapter 62. However, it is to be understood that, in alternative embodiments, the ganged adapter 62 may include fewer or more adapters 60 and in various arrangements. For example, the adapters 60 may have fewer or more than four connector ports. Further, as an alternative, the ganged adapter 62 may not be an assembled group of adapters 60. Instead, the ganged adapter 62 may be of monolithic construction (not shown). Moreover, an interface housing 64 is configured to hold (or house) the ganged adapter 62 within the interface housing 64. Together, the ganged adapter 62 and the interface housing 64 form an interface assembly 66.

With continued reference to Fig. 5, any conventional, or yet to be developed, optical connector or connectorization scheme may be used in accordance with the present disclosure, including, but not limited to simplex or duplex connectors (e.g., LC connectors) and multi-fiber connectors (e.g., MPO connectors). For example, the connection interfaces 58 or terminal connectors (not shown) may include MPO (multi-fiber push on) connectors, which are configured for multi-fiber cables including multiple sub-units of optical fibers (e.g., between four to 24 optical fibers). In other embodiments, the connection interfaces 58 or terminal connectors may be a different type of multi-fiber connector, such as an SN-MT connector commercially available from Senko Advanced Components, Inc. or an MMC connector commercially available from US Conec Ltd. (e.g., a 24-fiber MMC connector). In an exemplary embodiment, the distribution end 54 of the fiber optic cable 40 may include 16 connection interfaces 58 with each connection interface 58 being configured as a 24-fiber MMC connector. Such small form factor distribution connectors, like MMC connectors, allows for the receiving adapters 60 (e.g., as shown in Fig. 5) to be closely grouped together and be of minimal width. For example, the interface assembly 66 (including the ganged adapter 62 and interface housing 64) may have a width of four inches or less. If the interface assembly 66 is held to a minimal size, it may require a smaller pulling grip 72. This would allow the interface assembly 66 to be pulled through conduit, for example, that is as small as four inches in diameter, for example. Though, it should be understood that the width of the interface assembly 66 may be more or less than four inches.

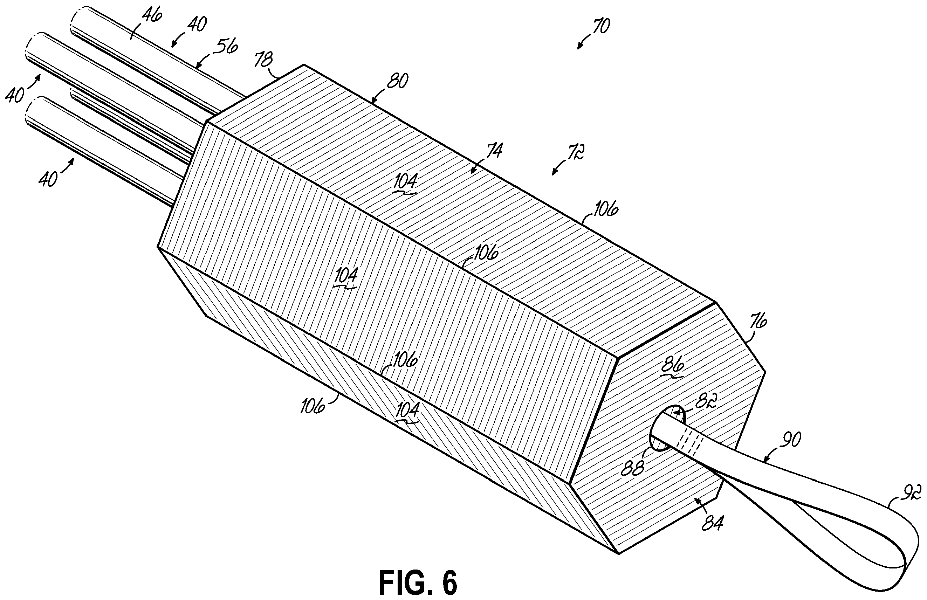

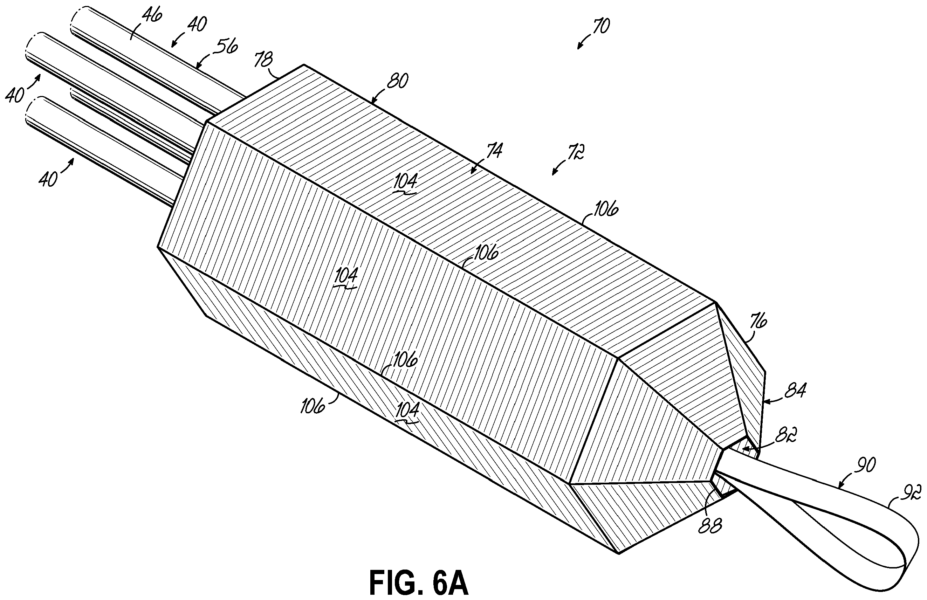

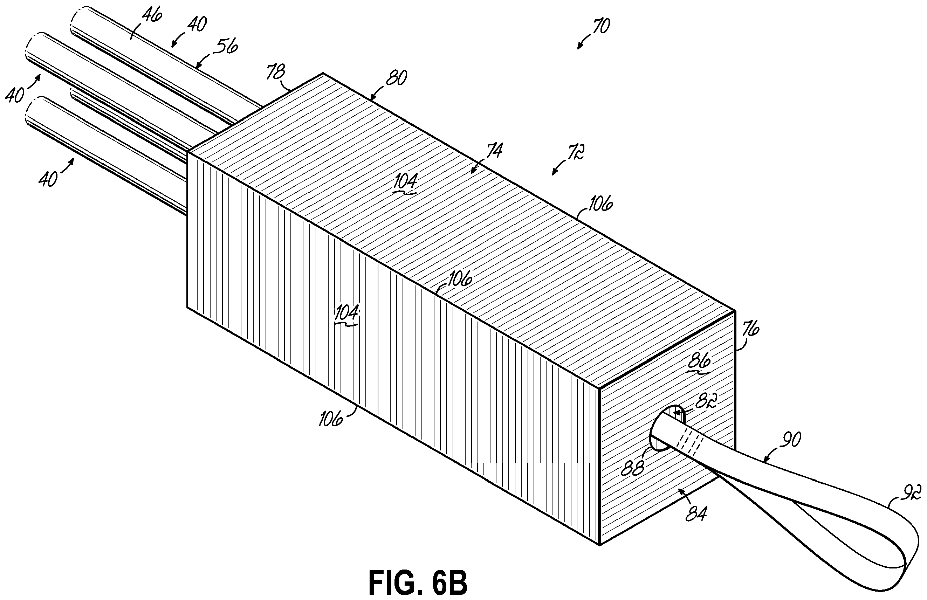

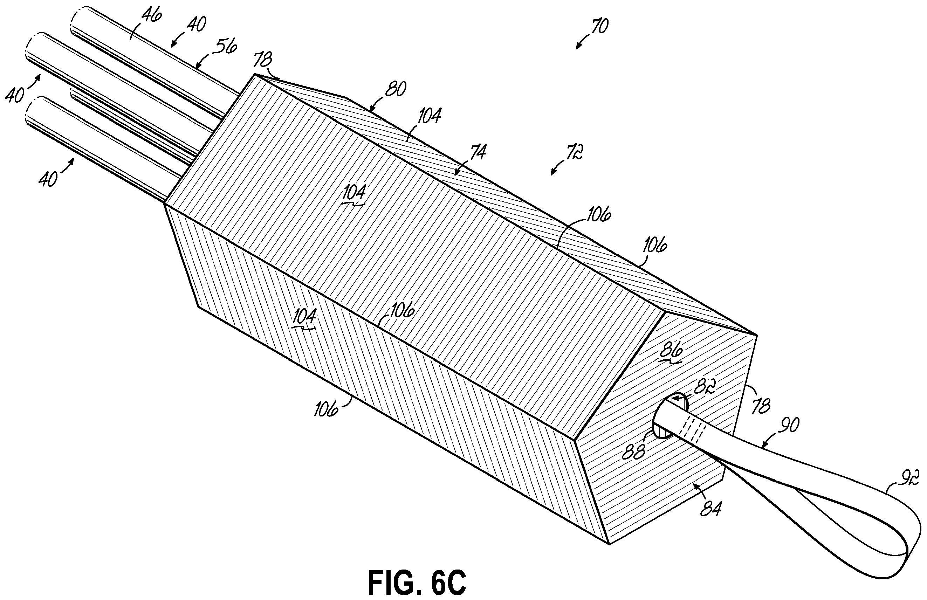

Figs. 6-6C illustrate embodiments of a fiber optic cable assembly 70 including a fiber optic cable 40 and a pulling grip 72. The pulling grip 72 is configured to enclose the connection interface 58 (and the interface assembly 66) that terminate the optical fibers 42 at the end (e.g., distribution end 54) of the fiber optic cable 40. Additionally, the pulling grip 72 is configured to transfer tension on the pulling grip 72 to the fiber optic cable 40, and, more particularly, to the at least one strength member 48 thereof along a load path that effectively bypasses the connection interfaces 58 and the optical fibers 42 terminated by the connection interfaces 58. This minimizes the risk of damaging the fiber optic cable 40 during installation. Optionally, the transfer of the tension load from the pulling grip 72 to the at least one strength member 48 is along a direct load path and does not include, for example, a furcation housing or other similar intervening structure.

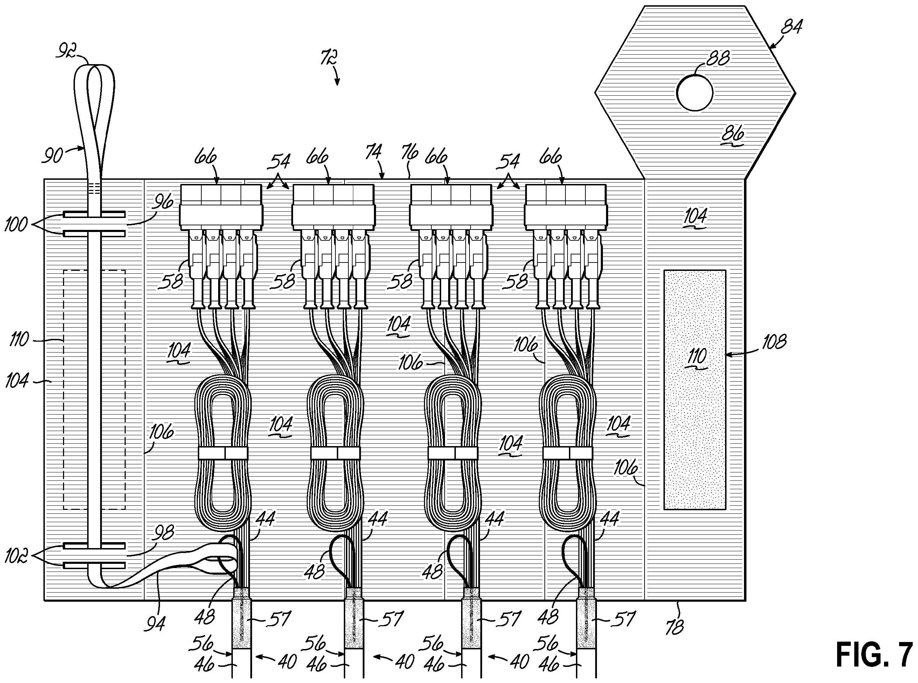

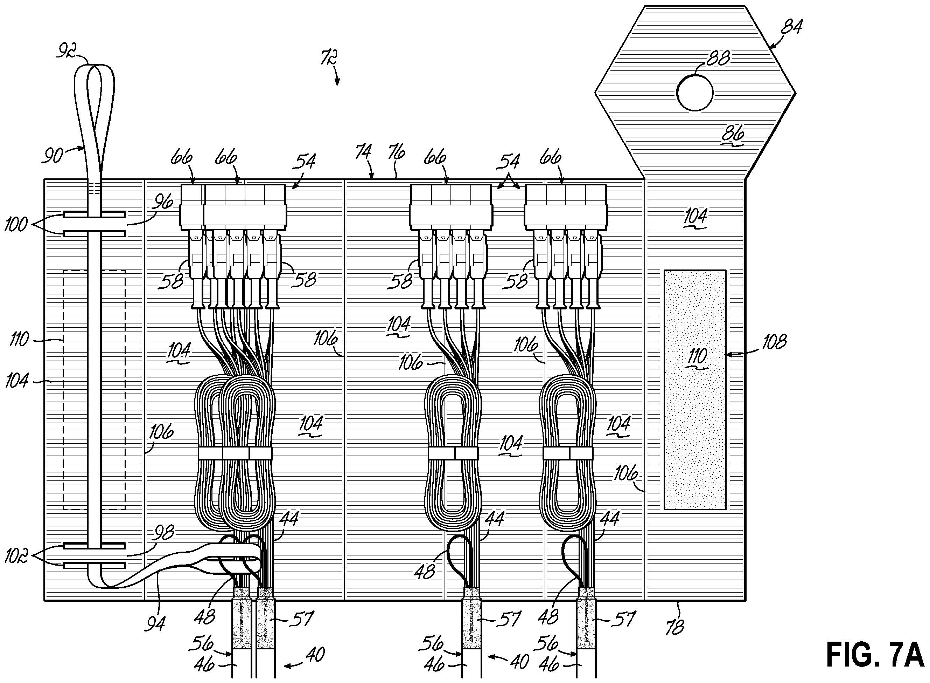

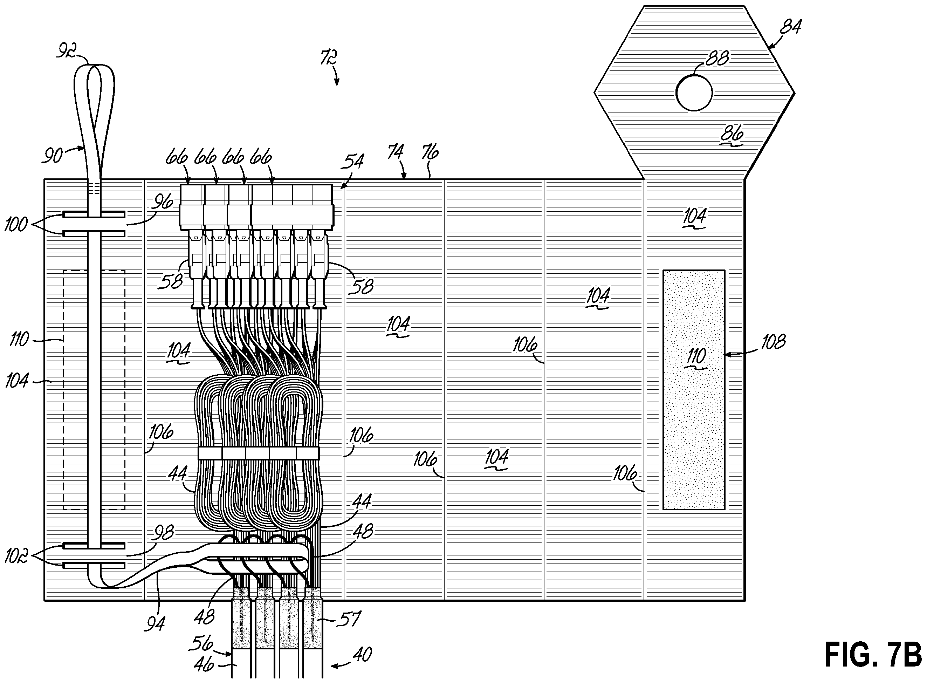

The pulling grip 72 includes a foldable body 74 having a proximal end 76 and a distal end 78. As used herein, the term "proximal" references a location or direction more toward the end of the fiber optic cable 40 and the term "distal" refers to a location or direction away from the end of the fiber optic cable 40. The foldable body 74 defines an opened position (Fig. 7, for example) and a closed position (Fig. 6, for example). In the opened position, the foldable body 74 is configured to receive at least one connection interface 58 between the proximal end 76 and the distal end 78 of the foldable body 74. In the closed position, the foldable body 74 forms an elongate tubular member 80 defining an interior cavity 82. The foldable body 74 is configured to receive the at least one connection interface 58 within the interior cavity 82 (in the closed position) such that the pulling grip 72 at least partially encloses the at least one connection interface 58.

With continued reference to Figs. 6-6C, in an exemplary embodiment, the foldable body 74 (in the closed position) may have a polygonal cross-sectional profile. For example, the polygonal cross-sectional profile may be that of a hexagon (Figs. 6 and 6A), quadrilateral (Fig. 6B), or a pentagon (Fig. 6C). It should be recognized, however, that other cross-sectional profiles (e.g., octagon, circular, etc.) may be possible. In an exemplary embodiment, the foldable body 74 may be formed from a material having adequate tensile strength to accommodate the tensile loads expected during the routing of the fiber optic cable 40 in the pathways (e.g., cable tray 38). Optionally, for example, the foldable body 74 may be formed from a corrugated cardboard or plastic, and as such may be generally rigid in its construction. The rigidity of the foldable body 74 may also prevent the plurality of optical fibers 42 and the at least one connection interface 58 that terminates the optical fibers 42 and contained in the interior cavity 82 of the foldable body 74 from being crushed or otherwise damaged as the fiber optic cable 40 is being moved through or along the pathways (e.g., cable tray 38). Other materials (such as metal or PVC, for example) may also be possible and the particular material of the foldable body 74 should not be limited to the specific materials described herein.

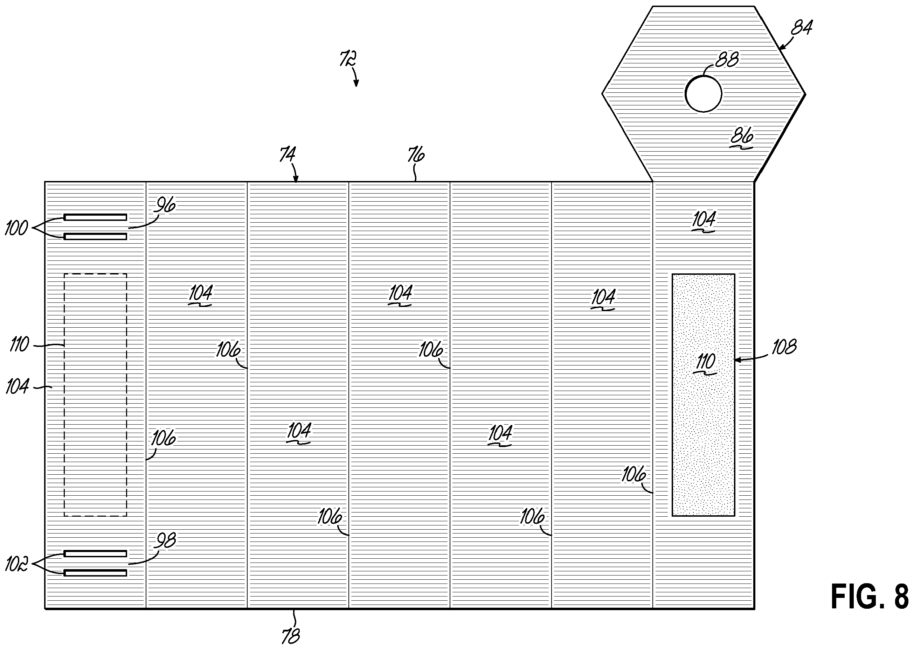

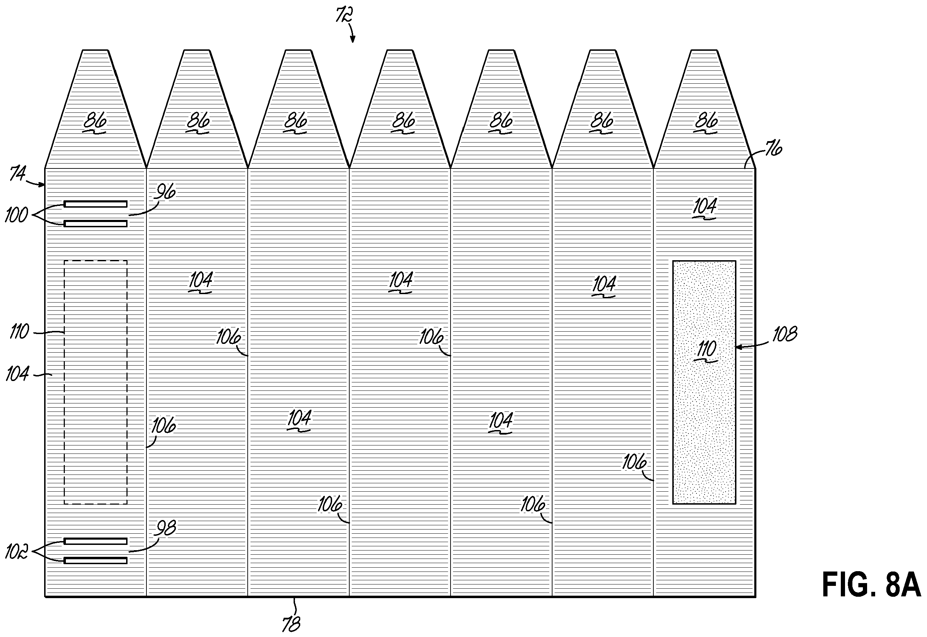

The proximal end 76 of the foldable body 74 (and thus the interior cavity 82) may be closed off by an end cap 84 when in the closed position. Optionally, the end cap 84 may include a generally planar body 86 having an aperture 88 formed in the planar body 86 (Figs. 6, 6B, 6C). As an alternative option, the end cap 84 may be substantially cone or pyramid shaped and formed by a number of discrete planar bodies 86 (Fig. 6A). Such may advantageously aid with routing the pulling grip 72 through or along the pathways (e.g., cable tray 38). The end cap 84 may be integrally formed with the foldable body 74 and be formed of the same material as the foldable body 74, i.e., the foldable body 74 and the end cap 84 form a monolithic body. In an alternative embodiment (Fig. 8A), the end cap 84 may be a separate element and releasably coupled or couplable to the foldable body 74. If separate from the foldable body 74, the end cap 84 may be formed from a material having adequate tensile strength to accommodate the tensile loads expected during the routing of the fiber optic cable 40 along or through the pathways (e.g., cable tray 38). The material of the separable end cap 84 may be, for example, the same as or different from the material of the foldable body 74. The end cap 84 may fit over the end of the foldable body 74 (i.e., in the closed position) by friction fit, for example. Other means of attaching the separable end cap 84 to the foldable body 74 may also be possible, including bonding, welding, fasteners, etc.

With continued reference to Figs. 6-6C, the pulling grip 72 may be connected to the fiber optic cable 40 (or more than one fiber optic cable 40) by the pulling band 90 to transfer the tensile loads applied to the pulling grip 72, as explained in greater detail below with respect to Figs. 7-7B. More specifically, the pulling band 90 may extend through the aperture 88 of the end cap 84 to an exterior of the pulling grip 72 such that the pulling band 90 can be connected to a tension member (not shown) to facilitate pulling the pulling grip 72 in or through pathways (e.g., a cable tray 38) of the fiber optic network.

Figs. 7-7B illustrate embodiments of the fiber optic cable assembly 70 with the foldable body 74 in the opened position. As shown, the pulling band 90 is connected to the foldable body 74 and also connected to a strength member 48 of a fiber optic cable 40 such that a tensile load imposed on the pulling grip 72 is transferred to the strength member 48 of the fiber optic cable 40 along a load path that bypasses the at least one connection interface 58. Optionally, the pulling band may be fixedly secured to the foldable body 74. Alternatively, however, the pulling band 90 may be selectively movably connected to the foldable body 74, such that the pulling band 90 may be adjusted relative to the foldable body 74.

The pulling band 90 includes a first end 92 and a second end 94. The first end 92 of the pulling band 90 is configured to extend beyond the proximal end 76 of the foldable body 74 to be connected to a tension member (not shown) for pulling the pulling grip 72 and the fiber optic cable(s) 40 along a pathway (e.g., cable tray 38) of the fiber optic network. The pulling band 90 further includes a second end 94 configured to be positioned between the proximal end 76 and distal end 78 of the foldable body 74 to be connected to at least one strength member 48 of the fiber optic cable(s) 40.

With continued reference to Figs. 7-7B, in an exemplary embodiment, the pulling band 90 may be connected to the foldable body 74 at one or more locations 96, 98 between the first end 92 and second end 94 of the pulling band 90 and between the proximal end 76 and distal end 78 of the foldable body 74. The first and second locations 96, 98 may be arranged such that an overlapping length of the pulling band 90 extends along at least a portion of a length of the foldable body 74. More specifically, a longitudinal distance between the first location 96 and the second location 98 may be greater than 50% of the length of the foldable body 74. As an alternative option, the longitudinal distance between the first location 96 and the second location 98 may be greater than 70% of the length of the foldable body 74.

Optionally, a first location 96 may be located adjacent to the proximal end 76 of the foldable body 74 and the second location 98 may be located adjacent the distal end 78 of the foldable body 74. Optionally, the first location 96 may include at least a first slot 100 and the pulling band 90 may be configured to extend through the first slot 100 to connect the pulling band 90 to the foldable body 74 at the first location 96. Further, the second location 98 may include at least a second slot 102 and the pulling band 90 may be configured to extend through the second slot 102 to connect the pulling band 90 to the foldable body 74 at the second location 98. In an exemplary embodiment, the first location 96 of the foldable body 74 may include a pair of first slots 100, and the second location 98 of the foldable body 74 may include a pair of second slots 102 to further secure the pulling band 90 to the foldable body 74.

With continued reference to Figs. 7-7B, optionally, the pulling band 90 is configured so that a substantial portion of the length of the pulling band 90 that overlaps the pulling grip 72 is located within the interior cavity 82 when the pulling grip 72 is in the closed position (Fig. 6, for example). Such an arrangement advantageously protects a substantial portion of the length of the pulling band 90 within the pulling grip 72 from potential environmental hazards (e.g., exposed screws, etc.) of the pathways, and thereby minimizes damage and/or snagging during installation. Specifically, the pulling band 90 may optionally be configured to extend within the interior cavity 82 of the pulling grip 72 for at least 50% of the overlapping length of the pulling grip 72. Alternatively, the pulling band 90 may optionally be configured to extend within the interior cavity 82 of the pulling grip 72 for at least 70% of the overlapping length of the pulling grip 72. As a further alternative, the pulling band 90 may be configured to extend within the interior cavity 82 of the pulling grip 72 for at least 90% of the overlapping length of the pulling grip 72.

In the embodiment depicted in Figs. 7-7B, four fiber optic cables 40 are located in the pulling grip 72 (in the opened position). It should be understood that the pulling grip 72 could be used with any number of fiber optic cables 40 that will fit within the pulling grip 72 when the pulling grip 72 is in the closed position. For example, the pulling grip 72 could be used with a single fiber optic cable 40. Or, as shown in Figs. 7-7B, the pulling grip 72 could be used with a plurality of fiber optic cables 40. Advantageously, a single pulling grip 72 can be used to pull multiple fiber optic cables 40 through the pathways (e.g., cable tray 38) at the same time. Such an arrangement allows for more efficient installation over the traditional method of using a single pulling grip for each fiber optic cable 40. Additionally, though the fiber optic cable 40 in the depicted embodiment is a distribution cable 36, it should be appreciated that the application of the pulling grip 72 is not limited to use with a distribution cable 36. Specifically, use of the pulling grip 72 may be applicable to a variety of environments in a data center 10 or a fiber optic network 16 more broadly. For example, the fiber optic cable 40 may alternatively be an indoor cable 24 or a trunk cable 20. Furthermore, the pulling grip 72 may b used in cable installations in a control office or other locations in an FTTx application. Thus, aspects of the disclosure should not be limited to a particular application or environment of a fiber optic network.

To pull at least one, and preferably a plurality of fiber optic cables 40 along a pathway (e.g., cable tray 38), the second end 94 of the pulling band 90 may be connected to at least one fiber optic cable 40 adjacent the distal end 78 of the foldable body 74 of the pulling grip 72. Specifically, the pulling band 90 may be releasably secured to a strength member 48 of the at least one fiber optic cable 40 adjacent the distal end 78 of the foldable body 74 of the pulling grip 72. For example, the second end 94 of the pulling band 90 may be tied to the strength member 48 to allow for easy attachment and removal of the pulling band 90 from the strength member 48. In Fig. 7, the second end 94 of the pulling band 90 may be releasably secured to a strength member 48 of one fiber topic cable 40 (of the four fiber optic cables 40 shown in the pulling grip 72). In Fig. 7A, the second end 94 of the pulling band 90 may be releasably secured to the strength members 48 of two fiber optic cables 40 (of the four fiber optic cables 40 shown in the pulling grip 72). In Fig. 7B, the second end 94 of the pulling band 90 may be releasably secured to the strength members 48 of all of the fiber optic cables 40 located in the pulling grip 72. It should be understood that, in further embodiments, a pulling band 90 could be attached to any number of fiber optic cables 40 located within the pulling grip 72.

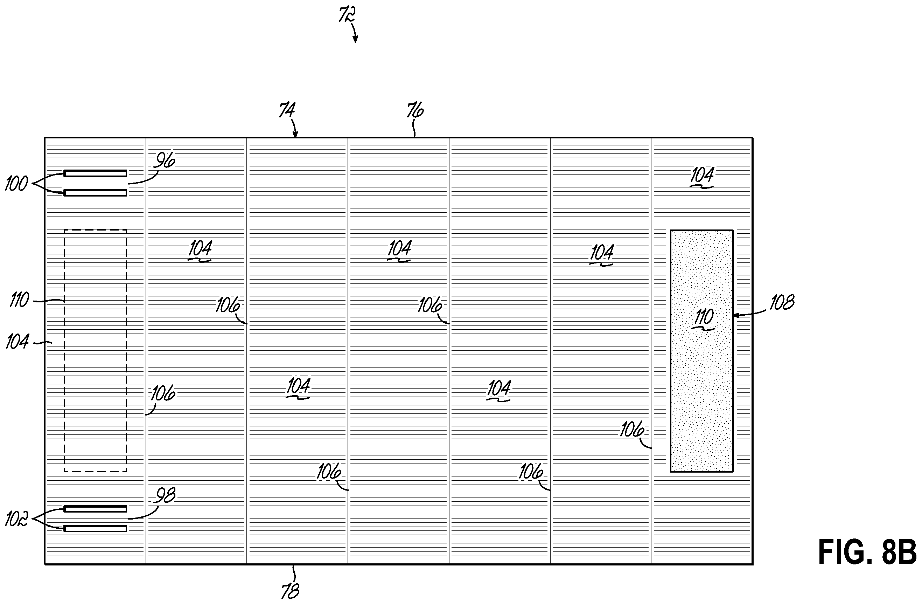

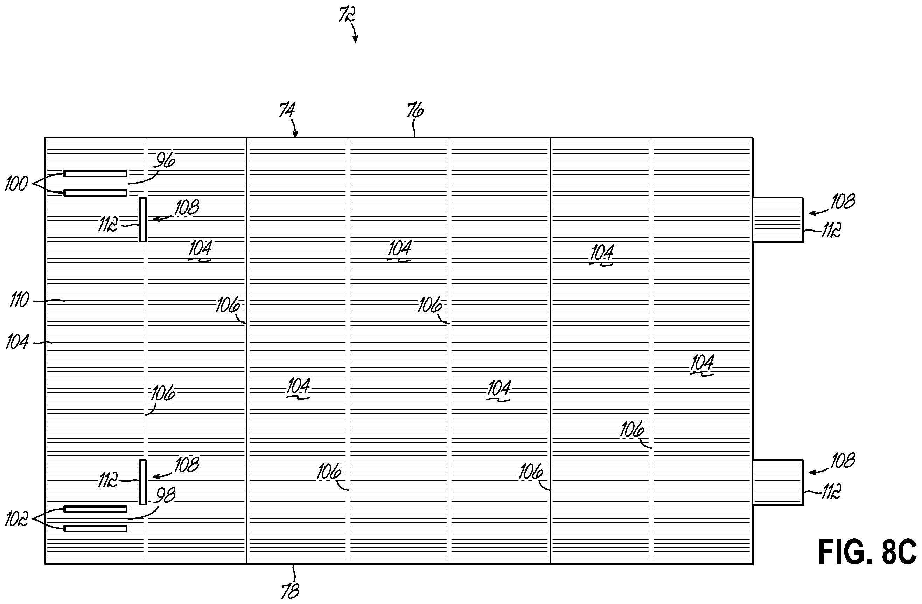

Figs. 8-8C illustrate embodiments of the foldable body 74 in the opened position. The foldable body 74 may include a plurality of planar panels 104 in a generally side-by-side arrangement. Each of the plurality of planar panels 104 may be adjoined to at least one adjacent planar panel 104 by at least one bend region 106 that allows adjacent planar panels 104 to fold relative to each other. When in an opened position (as shown in Figs. 8-8C, for example), the foldable body 74 may have a generally planar configuration. Advantageously, when in the opened position the generally planar configuration of the foldable body 74 allows for one or more fiber optic cables 40 to be easily loaded into the pulling grip 72 by simply placing the one or more fiber optic cables 40 on the foldable body 74 such that the connection interfaces 58 are located between the proximal end 76 and the distal end 78 of the foldable body 74. Further, this arrangement allows for the foldable body 74 to be formed from a monolithic sheet of a material (e.g., corrugated cardboard, corrugated plastic, as described above) to reduce manufacturing costs.

In the depicted embodiment, the foldable body 74 may include seven planar panels 104 in a side-by-side arrangement adjoined by bend regions 106. In the depicted embodiment, the width of a planar panel 104 is greater than the width of an interface assembly 66, for example. Optionally, the width of a planar panel is no greater than 10% larger than the width of the interface assembly 66, for example. Such relative dimensioning helps to minimize the overall outer diameter of the pulling grip 72 when in the closed position. When converted to the closed positioned (i.e., by folding the foldable body 74) the depicted foldable body 74 forms a hexagonal prism such that the cross-section of the tubular member 80 is a hexagon. Such is accomplished by overlapping the left-most and right-most (in Fig. 8, for example) planar panels 104. As will be described in greater detail below, the overlapped planar panels 104 are releasably secured by at least one fastener 108. It should be understood that alternative embodiments of the foldable body 74 may be possible. For example, the foldable body 74 may include five planar panels 104 and form a rectangular prism when folded into the closed position with a square or rectangular cross-section of the tubular member 80. Similarly, the foldable body 74 could include nine planar panels 104 and form an octagonal prism when folded into the closed position with an octagonal cross-section of the tubular member 80.

With continued reference to Figs. 8-8C, the figures illustrate various fasteners 108 for releasably securing the foldable body 74 in the closed position. Figs. 8, 8A, and 8B feature a hook and loop fastener 110 for releasably securing the foldable body 74 in the closed position. Fig. 8C features tab and slot fasteners 112 for releasably securing the foldable body 74 in the closed position. It should be understood that alternative fasteners 108 may be available. For example, instead of or in addition to hook and loop fastener(s) 110 and/or tab and slot fastener(s) 112, the foldable body 74 could feature one or more press button fasteners for releasably securing the foldable body 74 in the closed position. Further, the foldable body 74 may include an end cap 84 that is integrally formed with the foldable body 74 (Figs. 8 and 8A). Alternatively, the end cap 84 may be a separate element and releasably coupled or couplable to the foldable body 74 (Figs. 8B and 8C).

Referencing now generally Figs. 1-8C, an exemplary method of attaching a pulling grip 72 to at least one fiber optic cable 40 will now be described. The foldable body 74 of the pulling grip 72 may be arranged in the opened position such that the foldable body 74 can readily accept the at least one fiber optic cable 40, and more particularly the at least one connection interface of the at least one fiber optic cable 40 thereon. Optionally, the foldable body 74 may be arranged in a generally planar configuration in the opened position. With the foldable body 74 in the opened position, one or more fiber optic cables 40 may be positioned on the foldable body 74. A fiber optic cable 40 may be positioning relative to the foldable body 74 such that the at least one connection interface 58 of the fiber topic cable 40 is located between a proximal end 76 and a distal end 78 of the foldable body 74. It should be understood that the pulling grip 72 may be used with more than one fiber optic cable 40 at a time. If the pulling grip 72 is being used with a plurality of the fiber cables 40 then the step of positioning the fiber optic cable 40 with respect to the foldable body 74 can be repeated for each of the fiber optic cables 40.

The second end 94 of the pulling band 90 may be connected to the at least one strength member 48 of the one or more fiber optic cables 40 by tying or other means. As noted above, if multiple fiber optic cables 40 are used with the pulling grip 72, the step of connecting the pulling band 90 to the strength member 48 of the fiber optic cable 40 may be repeated for some or all of the fiber optic cables 40. The pulling band 90 may also be connected to the foldable body 74. More specifically, as described above, the pulling band 90 may be threaded through slots 100, 102 in a planar panel 104 of the foldable body 74 such that the pulling band 90 is slidable relative to the foldable body 74. This allows the pulling band to be selectively adjusted relative to the foldable body 74.

With continued general reference to Figs. 1-8C, the foldable body 74 may be arranged into the closed position. Specifically, the foldable body 74 may be converted from the opened position to the closed position by folding the foldable body 74 about the bend regions 106 of the foldable body 74. In the closed position, the foldable body 74 defines an elongate tubular member 80 having an interior cavity 82. Further, the at least one connection interface 58 of the one or more fiber optic cables 40 may be located within the interior cavity 82 such that the pulling grip 72 at least partially encloses the at least one connection interface 58. The foldable body 74 may be releasably secured in the closed position by fasteners 108, as described above.

An exemplary method of routing the at least one fiber optic cable 40 along a pathway of a fiber optic network, such as the fiber optic network 16 at a data center 10, will now be described. The pulling grip 72 may be attached to an end of the at least one fiber optic cable 40 in the manner described above. In an exemplary embodiment, the fiber optic cable 40 having the pulling grip 72 connected thereto (forming the fiber optic cable assembly 70) is illustrated in Fig. 6, for example. A tension member (not shown), for example, connected to the first end 92 of the pulling band 90 of the pulling grip 72 and the fiber optic cable assembly 70 is pulled through the pathway (e.g., cable tray 38). The tensile load imposed on the pulling band 90 of the pulling grip 72 by the tension member is transferred through the pulling grip 72 (e.g., the pulling band 90) and directed to the at least one strength member 48 of the at least one fiber optic cable 40 along a load path that bypasses the at least one connection interface 58 of the at least one fiber optic cable 40.

When the end of the fiber optic cable 40 is pulled through the pathway and is located in its desired location, the pulling grip 72 may be removed from the fiber optic cable 40. For example, the fiber optic cable 40 may be a row distribution cable 36 and the pathway may be a cable tray 38. In this case, the distribution cable 36 may be pulled through the cable tray 38 and the end thereof connected within a intermediate distribution frame 34 or equipment rack 32, for example. In this case, when the end of the fiber optic cable 40 (e.g., distribution cable 36) is in the desired location, the pulling grip 72 may be removed from the end of the fiber optic cable 40.

While the present disclosure has been illustrated by the description of specific embodiments thereof, and while the embodiments have been described in considerable detail, it is not intended to restrict or in any way limit the scope of the appended claims to such detail. The various features discussed herein may be used alone or in any combination within and between the various embodiments. Additional advantages and modifications will readily appear to those skilled in the art. The disclosure in its broader aspects is therefore not limited to the specific details, representative apparatus and methods and illustrative examples shown and described. Accordingly, departures may be made from such details without departing from the scope of the disclosure.

## Claims

1. A pulling grip for routing at least one fiber optic cable along a pathway of a fiber optic network, the at least one fiber optic cable including an outer jacket, a plurality of optical fibers carried within the outer jacket, at least one strength member extending along a length of the at least one fiber optic cable, and at least one connection interface terminating the plurality of optical fibers, the pulling grip comprising:
a foldable body having a proximal end and a distal end and defining an opened position and a closed position, wherein in the opened position the foldable body is configured to receive the at least one connection interface between the proximal end and the distal end of the foldable body, wherein in the closed position the foldable body forms an elongate tubular member defining an interior cavity, and wherein the foldable body is configured to receive the at least one connection interface within the interior cavity in the closed position such that the pulling grip at least partially encloses the at least one connection interface; and
a pulling band connected to or connectable to the foldable body and configured to be releasably connected to the at least one strength member of the at least one fiber optic cable such that a tensile load imposed on the pulling grip is transferred to the at least one strength member of the at least one fiber optic cable along a load path that bypasses the at least one connection interface.

2. The pulling grip of claim 1, wherein the foldable body includes a plurality of planar panels in a side-by-side arrangement, and wherein each of the plurality of planar panels is adjoined to at least one adjacent planar panel by at least one bend region that allows adjacent planar panels to fold relative to each other.

3. The pulling grip of claim 1 or 2, wherein the foldable body is formed from a monolithic sheet of a material.

4. The pulling grip of any of the preceding claims, wherein in the closed position, the foldable body has a polygonal cross-sectional profile, preferably one selected from a quadrilateral, a pentagon, or a hexagon.

5. The pulling grip of any of the preceding claims, wherein the pulling band comprises:
a first end configured to be connected to a tension member for pulling the at least one fiber optic cable along the pathway of the fiber optic network; and
a second end configured to be connected to the at least one strength member of the at least one fiber optic cable,
wherein the pulling band is connected to or connectable to the foldable body at one or more locations between the first end and second end of the pulling band and between the proximal end and distal end of the foldable body so that an overlapping length of the pulling band extends along at least a portion of a length of the foldable body.

6. The pulling grip of claim 5, wherein:
the pulling band is connected or connectable to the foldable body at a first location adjacent the proximal end of the foldable body,
the pulling band is connected or connectable to the foldable body at a second location adjacent the distal end of the foldable body, and
a longitudinal distance between the first location and the second location is greater than 50% of the length of the foldable body, and preferably greater than 70% of the length of the foldable body.

7. The pulling grip of claim 5 or 6, wherein the foldable body includes at least a first slot at the first location, the pulling band configured to extend through the first slot to connect the pulling band to the foldable body at the first location, and wherein the foldable body includes at least a second slot at the second location, the pulling band configured to extend through the second slot to connect the pulling band to the foldable body at the second location.

8. The pulling grip of any of the proceeding claims, wherein the pulling band is slidably connected to or connectable to the foldable body such that the pulling band is adjustable relative to the foldable body.

9. The pulling grip of any of the preceding claims, wherein the pulling grip includes an end cap for closing off the interior cavity at the proximal end of the foldable body, the end cap including an aperture through which the pulling band is configured to extend to an exterior of the pulling grip, and the end cap is integrally formed with the foldable body.

10. The pulling grip of any of the preceding claims, wherein the pulling grip includes at least one fastener to selectively secure the foldable body in the closed position.

11. A fiber optic cable assembly for routing along a pathway of a fiber optic network, the fiber optic cable assembly comprising:
at least one fiber optic cable, comprising:
an outer jacket;
a plurality of optical fibers carried within the outer jacket;
at least one strength member extending along a length of the at least one fiber optic cable; and
at least one connection interface terminating the plurality of optical fibers, and
the pulling grip of any of claims 1-10 connected to the fiber optic cable assembly and, in the closed position, at least partially enclosing the at least one connection interface of the fiber optic cable assembly within the interior cavity.

12. The fiber optic cable assembly of claim 11, wherein the at least one fiber optic cable includes a plurality of fiber optic cables.

13. The fiber optic cable assembly of claim 12, wherein the pulling band is connected to the at least one strength member of one or more of the plurality of fiber optic cables.

14. A method of attaching a pulling grip according to any of the preceding claims to at least one fiber optic cable, the method comprising:
arranging the foldable body of the pulling grip in the opened position;
positioning the at least one fiber optic cable relative to the foldable body such that the at least one connection interface is located between the proximal end and the distal end of the foldable body;
connecting the pulling band to the at least one strength member of the at least one fiber optic cable;
arranging the foldable body of the pulling grip in the closed position, wherein the at least one connection interface is located within the interior cavity such that the pulling grip at least partially encloses the at least one connection interface; and
releasably securing the foldable body in the closed position.

15. The method of claim 14, wherein the method further comprises connecting the pulling band to the foldable body.
